(19) Europäisches Patentamt / European Patent Office / Office européen des brevets

(11) **EP 3 463 691 B1**

(12) **FASCICULE DE BREVET EUROPEEN**

(45) Date de publication et mention de la délivrance du brevet:
**30.08.2023 Bulletin 2023/35**

(21) Numéro de dépôt: **17726641.8**

(22) Date de dépôt: **31.05.2017**

(51) Classification Internationale des Brevets (IPC):
**B06B 1/06** (2006.01)

(52) Classification Coopérative des Brevets (CPC):
**B06B 1/0637**

(86) Numéro de dépôt international:
**PCT/EP2017/063156**

(87) Numéro de publication internationale:
**WO 2017/207627 (07.12.2017 Gazette 2017/49)**

(54) **RÉSEAU D'ÉLÉMENTS TRANSDUCTEURS ULTRASONORES**

ANORDNUNG VON ULTRASCHALLWANDLERELEMENTEN

ARRAY OF ULTRASONIC TRANSDUCER ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2016 FR 1654886**

(43) Date de publication de la demande:
**10.04.2019 Bulletin 2019/15**

(73) Titulaire: **Imasonic**
**70190 Voray sur L'Ognon (FR)**

(72) Inventeurs:
• **FLEURY, Gérard**
  **25115 Pouilley Les Vignes (FR)**
• **GUEY, Jean-Luc**
  **25480 Ecole-Valentin (FR)**

(74) Mandataire: **Regimbeau**
**20, rue de Chazelles**
**75847 Paris Cedex 17 (FR)**

(56) Documents cités:
**EP-A2- 0 225 120     WO-A2-2007/017781**
**FR-A1- 2 923 612**

• GAVRILOV L R ET AL: "A theoretical assessment of the relative performance of spherical phased arrays for ultrasound surgery", IEEE TRANSACTIONS ON ULTRASONICS, FERROELECTRICS AND FREQUENCY CONTROL, IEEE, US, vol. 47, no. 1, 1 janvier 2000 (2000-01-01), pages 125-139, XP011438045, ISSN: 0885-3010, DOI: 10.1109/58.818755

**Description**

La présente invention se rapporte au domaine des transducteurs à ultrasons. Plus précisément, l'invention concerne un réseau d'éléments transducteurs ultrasonores comprenant une pluralité d'éléments transducteurs répartis sur une surface de répartition.

Les ultrasons sont utilisés depuis longtemps en imagerie, que ce soit pour des applications médicales ou industrielles. On utilise pour générer et/ou détecter ces ultrasons des transducteurs ultrasonores organisés en réseau. Le type de réseau le plus courant est le réseau en une dimension, dit réseau 1D, dans lequel les éléments transducteurs sont alignés. Cependant un réseau 1D ne permet un balayage du faisceau ultrasonore que dans un plan. Des réseaux matriciels, dit 2D puisque les éléments transducteurs sont répartis en deux dimensions, ont été développés pour permettre un balayage volumique ainsi qu'une meilleure focalisation.

Pour des applications telles que l'échographie ultrasonore, on cherche à avoir un réseau matriciel d'éléments transducteurs capable de défléchir le faisceau d'ultrasons, c'est-à-dire de déplacer le faisceau ultrasonore en ajustant les retards dans les émissions des ultrasons par les différents éléments transducteurs constituant le réseau. Les éléments transducteurs sont activés selon des phases successives déterminées par le calcul d'un ordinateur afin de diriger le faisceau émis. On parle de réseau à commande de phase, plus connu sous l'appellation anglo-saxonne de "phased array".

Conventionnellement, les réseaux matriciels d'éléments transducteurs regroupent des éléments transducteurs de petite dimension par rapport à la longueur d'onde des ultrasons dans l'eau à la fréquence de fonctionnement des éléments transducteurs. Ces éléments transducteurs étant de petite taille, en termes de surface émettrice, les faisceaux émis sont naturellement divergents par diffraction, c'est-à-dire que le faisceau d'onde ultrasonore émis par un tel élément transducteur s'élargit en s'éloignant de l'élément transducteur. La plage angulaire pouvant être balayée par les ultrasons au moyen de la commande de phase des éléments transducteurs est d'autant plus grande que le faisceau émis est divergent. La divergence de ces petits éléments transducteurs permet donc de balayer une plus grande plage angulaire.

Par ailleurs, le faisceau ultrasonore émis par un réseau peut présenter des lobes de réseau lorsque le pas du réseau, c'est-à-dire la distance moyenne centre à centre entre deux éléments transducteurs voisins, dépasse la moitié de la longueur d'onde des ultrasons dans l'eau à la fréquence maximale des éléments transducteurs. Ces lobes de réseau sont d'autant plus importants que le pas augmente. On cherche alors à restreindre l'espacement entre les petits éléments transducteurs, de sorte que le pas du réseau soit petit devant la longueur d'onde des ultrasons dans l'eau à la fréquence de fonctionnement des éléments transducteurs. En raison de la petite dimension des éléments transducteurs, du faible pas du réseau et du nombre limité d'éléments pilotable par un système d'imagerie ultrasonore commercialement disponible à ce jour (quelques centaines maximum) le réseau présente généralement une petite taille.

L'article de Leonid R. Gavrilov et Jeffrey W. Hand "A Theoretical Assessment of the Relative Performance of Spherical Phased Arrays for Ultrasound Surgery", IEEE transactions on ultrasonic, ferroelectric and frequency control, vol. 47, no. 1, 2000, décrit la modélisation d'un réseau matriciel d'éléments transducteurs ultrasonores à commande de phase pour la chirurgie par ultrason (ablation de tissus). Il y est évoqué que réduire la taille des éléments permet d'en réduire la directivité, tandis que l'utilisation de transducteurs de grande dimension dégrade les performances.

On peut cependant désirer obtenir un réseau de grande dimension, par exemple pour augmenter la sensibilité dans le cas de l'échographie ultrasonore ou pour augmenter le gain d'antenne dans le cas d'ultrasons focalisés de haute intensité, ou bien encore permettre de réaliser des images sous des angles de vue différents sans déplacer le réseau. Dans ce cas, le nombre d'éléments transducteurs nécessaires pour que le réseau couvre une grande surface, en conservant les contraintes de dimensionnement mentionnées précédemment, devient très important.

A titre d'exemple, pour une fréquence de 5 MHz, la longueur d'onde $\lambda$ dans l'eau vaut 0,3 mm. Un réseau matriciel couvrant une surface de 30 mm x 30 mm devra donc avoir au minimum 40 000 éléments en gardant un pas de réseau inférieur à $\lambda/2$, c'est-à-dire 0,15 mm, dans les deux directions. La commande d'autant d'éléments transducteurs devient alors problématique, tant au niveau de la connectique requise, que de la gestion des calculs.

Utiliser des éléments transducteurs plus grands afin de limiter le nombre d'éléments à commander est problématique. En effet, un élément transducteur est d'autant plus directif que sa surface d'émission est grande. Des éléments transducteurs de grande taille limitent l'amplitude de déflexion possible pour les ultrasons. En outre, en raison de la grande taille des éléments transducteurs, le pas du réseau est grand. Il apparaît alors des lobes de réseau dont les interférences dégradent la qualité des ultrasons et faussent ainsi l'image obtenue au moyen de ces ultrasons.

PRESENTATION DE L'INVENTION

L'invention a pour but de remédier au moins en partie à ces inconvénients et préférentiellement à tous, et vise notamment à proposer un réseau d'éléments transducteurs ultrasonores qui permettent un grand balayage angulaire du faisceau d'ultrasons émis, en limitant le nombre d'éléments transducteurs à commander et avec une géométrie de faisceau dans laquelle le lobe principal a une amplitude très supérieure à celle des lobes parasites créés hors de la direction principale.

A cet effet, il est proposé un réseau matriciel d'éléments transducteurs ultrasonores à commande de phase adapté pour défléchir un faisceau d'ultrasons sur une plage angulaire, comprenant une pluralité d'éléments transducteurs répartis sur une surface de répartition, chacun des éléments transducteurs étant adapté pour émettre, à partir d'une surface d'émission, des ultrasons à une fréquence comprise entre 100 kHz et 100 MHz en direction d'un volume de travail, remarquable en ce que

- chacun des éléments transducteurs est configuré pour émettre des ultrasons de façon divergente au moins au niveau du volume de travail, chaque élément transducteur (1) ayant une acceptance angulaire à -3 dB par rapport au maximum d'au moins de 10% supérieure à celle d'un transducteur plan équivalent de même dimension;
- lesdits éléments transducteurs présentent chacun une plus grande dimension de leur surface d'émission supérieure à 1,5 fois la longueur d'onde des ultrasons dans l'eau à 30°C,
- la répartition des éléments transducteurs sur la surface de répartition du réseau est apériodique.

Le réseau matriciel d'éléments transducteurs ultrasonores est avantageusement complété par les caractéristiques suivantes, prises seules ou en l'une quelconque de leurs combinaisons techniquement possibles:

- la répartition des éléments transducteurs sur la surface de répartition présente une absence de symétrie ;
- le réseau de transducteurs comprend au moins 64 éléments transducteurs et la plus grande dimension de la surface de répartition sur laquelle se répartissent lesdits éléments transducteurs est supérieure à douze fois la longueur d'onde des ultrasons dans l'eau à 30°C;
- la surface de répartition présente une géométrie concave vue depuis la direction d'émission des ondes ultrasonores ;
- la surface d'émission des éléments transducteurs a une forme convexe vue depuis la direction d'émission des ondes ultrasonores;
- chaque élément transducteur est pourvu d'une lentille acoustique divergente;
- la lentille acoustique divergente comprend au moins deux couches de matériaux disposés dans la direction d'émission, une première couche de matériau proche de l'élément transducteur, dans laquelle les ultrasons se propagent avec une vitesse plus importante que dans l'eau, et une deuxième couche de matériau, plus éloignée de l'élément transducteur, dans laquelle les ultrasons se propagent avec une vitesse moins importante que dans l'eau;
- l'interface entre les deux couches de matériaux de la lentille acoustique divergente présente une forme convexe, de sorte que la distance entre ladite interface et la surface d'émission soit supérieure au centre de la surface d'émission par rapport à sa périphérie;
- chaque élément transducteur se compose de plusieurs zones d'émission commandées chacune en émission par un signal d'émission local, et un déphaseur recevant d'une voie de commande un signal d'émission global pour l'ensemble d'un élément transducteur et émettant en direction de chacune des zones d'émission dudit élément transducteur le signal d'émission local propre à ladite zone d'émission, ledit signal d'émission local étant retardé par rapport audit signal d'émission global d'un retard d'autant plus grand que la zone auquel ledit signal d'émission local est destiné est éloignée du centre de l'élément transducteur;
- la distance focale élémentaire entre la surface d'émission d'un élément transducteur et le point focal élémentaire dudit élément transducteur est inférieure à la distance focale globale entre la surface de répartition et un point focal global du réseau matriciel d'éléments transducteurs ultrasonores;
- des éléments transducteurs présentent chacun un point focal élémentaire distinct des points focaux élémentaires des autres éléments transducteurs;
- chaque élément transducteur est pourvu d'une lentille acoustique convergente;
- chaque élément transducteur se compose de plusieurs zones d'émission commandées chacune en émission par un signal d'émission local, et un déphaseur recevant d'une voie de commande un signal d'émission global pour l'ensemble d'un élément transducteur et émettant en direction de chacune des zones d'émission dudit élément transducteur le signal d'émission local propre à ladite zone d'émission, ledit signal d'émission local étant retardé par rapport audit signal d'émission global d'un retard d'autant plus grand que la zone auquel ledit signal d'émission local est destiné est proche du centre de l'élément transducteur.

PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:

- les figures 1 et 2 illustrent une vue d'ensemble simplifiée d'un réseau d'éléments transducteurs ultrasonores selon des modes de réalisation possibles de l'invention ;

- la figure 3 illustre schématiquement la géométrie convexe de la surface d'émission d'un élément transducteur ultrasonore;
- les figures 4 et 5 illustrent schématiquement deux exemples d'éléments transducteurs ultrasonores comprenant une lentille acoustique divergente;
- la figure 6 illustre schématiquement un élément transducteur ultrasonore comprenant plusieurs zones d'émission;

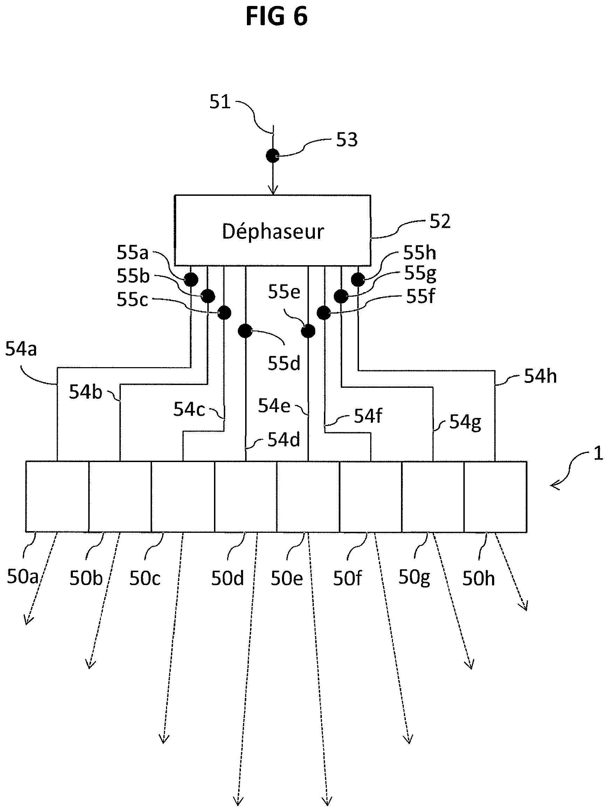

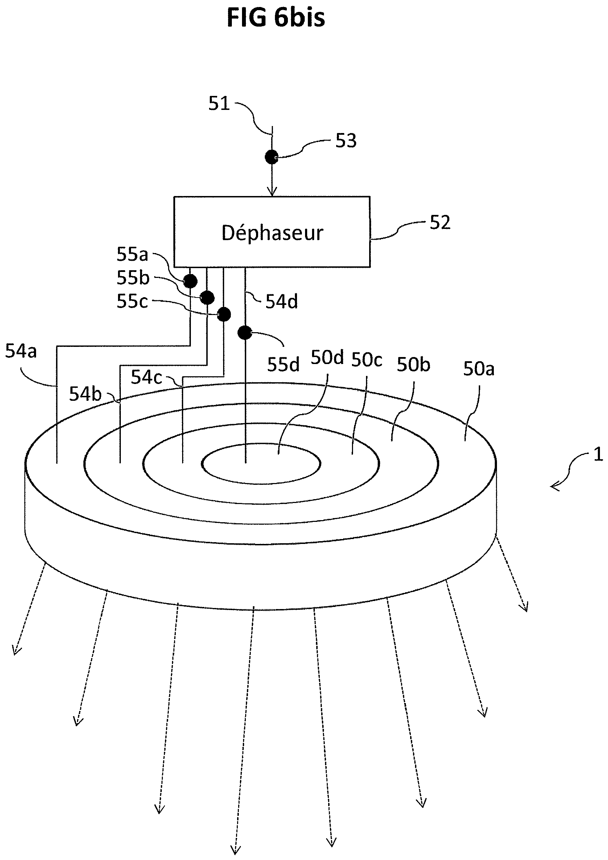

- la figure 6bis illustre schématiquement une variante de la figure 6 dans laquelle l'élément transducteur comprend plusieurs zones d'émission annulaires concentriques ;

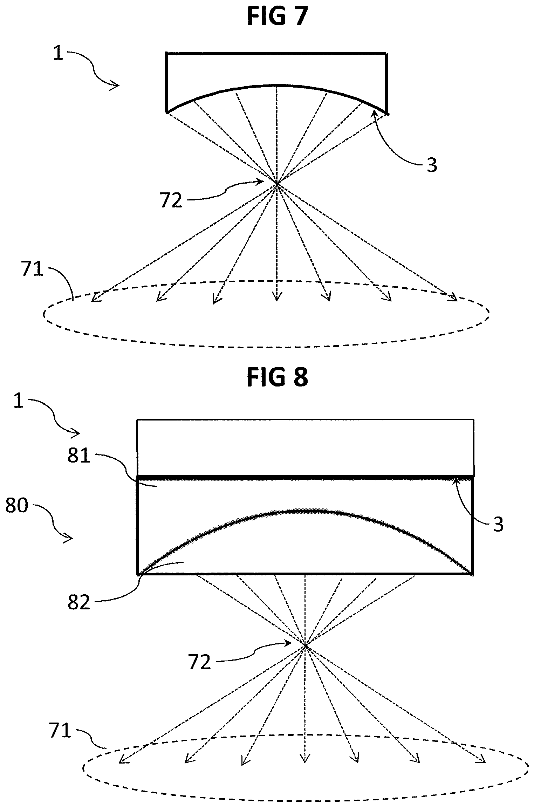

- la figure 7 illustre schématiquement la géométrie concave de la surface d'émission d'un élément transducteur ultrasonore;
- la figure 8 illustre schématiquement un exemple d'élément transducteur ultrasonore comprenant une lentille acoustique convergente.

DESCRIPTION DETAILLEE

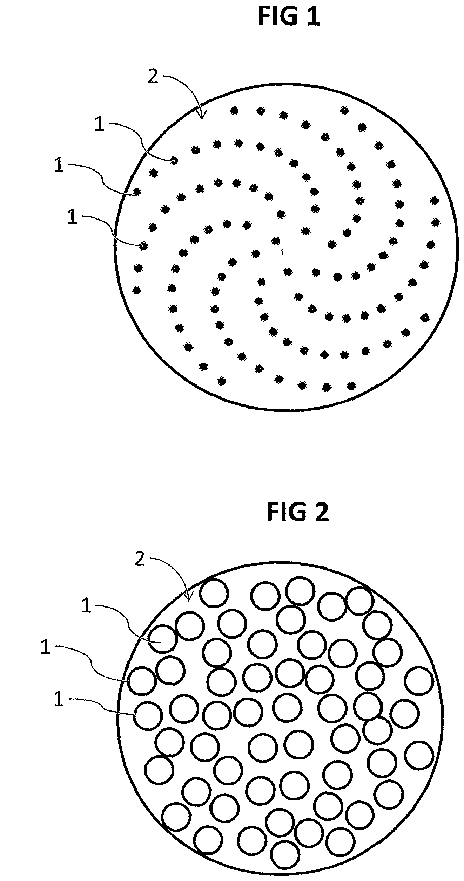

En référence aux figures 1 et 2, le réseau d'éléments transducteurs ultrasonores comprend une pluralité d'éléments transducteurs 1 répartis sur une surface de répartition 2. Chaque élément transducteur 1 est adapté pour émettre des ultrasons à une fréquence comprise entre 100 kHz et 100 MHz, et de préférence entre 200 kHz et 50 MHz. La plus grande dimension de la surface de répartition 2 sur laquelle se répartissent lesdits éléments transducteurs est supérieure à $12\lambda$ dans au moins une direction, $\lambda$ étant la longueur d'onde des ondes ultrasonores émises dans l'eau à 30°C, et de préférence encore supérieure à $40\lambda$.

Le réseau peut comprendre entre 64 et plusieurs milliers d'éléments transducteurs 1, par exemple 128, 256, 512 ou 1024 éléments transducteurs 1. Chaque élément transducteur 1 est piloté indépendamment par une voie de commande portant un signal d'émission. Il y a donc autant de voies de commande que d'éléments transducteurs 1. De préférence, le réseau comprend au moins 128 éléments transducteurs 1. De préférence, le taux de remplissage de la surface de répartition 2 par les éléments transducteurs 1 est supérieur à 60 %.

Les éléments transducteurs du réseau peuvent être identiques ou peuvent être différents, et par exemple varier en fréquence et/ou en géométrie, y compris non axisymétrique. Par ailleurs, tout ou partie des éléments transducteurs 1 peuvent fonctionner non seulement en émission mais également en réception.

De préférence, la surface de répartition 2 du réseau présente une géométrie plane ou concave. En outre, la répartition des éléments transducteurs 1 sur la surface de répartition 2 est apériodique. En particulier, les distances des éléments entre eux ou par rapport au centre ne présentent pas de période.

De préférence, la répartition des éléments transducteurs 1 sur la surface de répartition 2 présente une absence de symétrie, et notamment une absence de symétrie axiale.

La répartition des éléments transducteurs 1 sur la surface de répartition 2 présente le moins de symétrie possible. Ainsi, de préférence, la répartition des éléments transducteurs 1 sur la surface de répartition 2 présente également une absence de symétrie de rotation. L'absence de symétrie dans la répartition des éléments transducteurs 1 sur la surface de répartition 2 permet d'éviter les reconstructions de lobes de réseau à côté du lobe principal des ultrasons émis par le réseau.

Par exemple, la figure 1 illustre une répartition dite en spirale de Fermat des éléments transducteurs 1, qui est apériodique et ne présente pas de symétrie. La répartition des éléments transducteurs 1 sur la surface de répartition 2 peut également être une distribution aléatoire ou pseudo-aléatoire, qui est également apériodique et présente une absence de symétrie. La figure 2 illustre un exemple de répartition aléatoire des éléments transducteurs 1 sur la surface de répartition 2.

Les éléments transducteurs 1 émettent des ultrasons dans la direction d'émission à partir d'une surface d'émission, la direction d'émission constituant l'avant de l'élément transducteur. Chacun des éléments transducteurs présente une plus grande dimension de sa surface d'émission 3 supérieure à 1,5 fois la longueur d'onde $\lambda$ des ultrasons qu'il émet dans l'eau à 30°C, la fréquence des ultrasons étant comprise entre 200 kHz et 50MHz. Typiquement, la grande dimension de la surface d'émission 3 est comprise entre $3\lambda$ et $10\lambda$. Le tableau 1 ci-dessous explicite ce dimensionnement, avec une vitesse dans l'eau à 30°C de 1500 m.s$^{-1}$.

Tableau 1

| Fréquence En MHz | 0.2 | 0.5 | 1.0 | 5.0 | 10 | 50 |
|---|---|---|---|---|---|---|
| Longueur d'onde $\lambda$ dans l'eau En mm | 7.5 | 3.0 | 1.5 | 0.3 | 0.15 | 0.03 |
| Seuil de dimension d'un élément ($1,5\lambda$) En mm | 11.25 | 4.5 | 2.25 | 0.45 | 0.225 | 0.045 |
| Valeur typique de dimension d'un élément (entre $3\lambda$ et $10\lambda$) En mm | 22.5 à 75 | 9 à 30 | 4.5 à 15 | 0.9 à 3 | 0.45 à 1.5 | 0.09 à 0.3 |

Ainsi, pour un élément transducteur 1 configuré pour émettre des ultrasons à une fréquence de fonctionnement de 1 MHz, la plus grande dimension de sa surface d'émission 3 est supérieure à 2.25 mm.

Ce dimensionnement des éléments transducteurs 1 permet d'obtenir un réseau de grande dimension, sans cependant, en raison de leurs tailles, avoir trop d'éléments transducteurs à commander. La grande taille des éléments transducteurs est cependant préjudiciable à la capacité de déflexion du faisceau.

Par conséquent, les éléments transducteurs 1 sont configurés pour émettre des ultrasons se propageant de façon divergente. On parle d'éléments transducteurs divergents. Le rayonnement ultrasonore d'un élément transducteur 1 est causé par la vibration de l'élément transducteur 1, commandé par la voie de commande qui y est associée, qui va entraîner un champ de déplacement dans le milieu de propagation. Ce champ s'étend de façon plus ou moins anisotrope dans le milieu de propagation, avec généralement une intensité plus importante dans une direction privilégiée constituant l'axe acoustique, et s'atténuant avec l'éloignement angulaire de cet axe. Un élément transducteur 1 est divergent quand l'atténuation de l'intensité avec l'éloignement angulaire de l'axe acoustique est faible.

La divergence d'un élément transducteur 1 peut être mesurée acoustiquement. On parle de mesure de directivité ou, plus précisément, de mesure d'acceptance angulaire. Il s'agit d'une mesure dans l'eau de l'amplitude des ultrasons émis par un élément transducteur 1 du réseau dans son champ d'émission. A une distance donnée, un hydrophone (transducteur de petite dimension utilisé en réception) enregistre la pression émise en fonction de l'angle de mesure. L'acceptance angulaire correspond à l'ouverture angulaire pour laquelle l'amplitude mesurée est supérieure à un seuil, par exemple -3dB par rapport au maximum dans l'eau à 30° C. On considère ici qu'un élément transducteur est divergent quand l'acceptance angulaire à -3 dB par rapport au maximum est au moins de 10% supérieure à celle d'un transducteur plan équivalent de même dimension.

A titre d'exemple, l'acceptante angulaire 2θ d'un élément plan circulaire peut être déterminée analytiquement par une formule analytique donnée dans l'ouvrage "Acoustic Waves: Devices, Imaging, and Analog Signal Processing" par Gordon. S. KINO, Prentice Hall Inc., 1987, ISBN 978-0130030474.

D'après cette formule, pour un transducteur de diamètre 2a fonctionnant à la fréquence correspondant à la longueur d'onde λ dans le milieu de propagation considéré, le demi-angle θ de l'acceptance angulaire à -3dB vaut, en radian:

$$\theta = 0.25 \ \lambda/a$$

En considérant un élément transducteur 1 fonctionnant à 1 MHz avec 70% de bande passante, avec une géométrie circulaire et son diamètre 2a (ou ouverture) est de 9 mm (soit environ 6 longueurs d'onde dans l'eau), on obtient alors un demi-angle θ d'acceptance angulaire en degré d'environ 4,8°, et donc une acceptance angulaire 2θ d'environ 8,6°, qu'on peut arrondir à 10° pour simplifier.

A partir de cet exemple, un élément transducteur 1 circulaire d'un diamètre de 9 mm est alors considéré comme divergent si son acceptance angulaire est d'au moins 11°, soit 10% de plus que l'acceptance angulaire calculée pour un élément transducteur 1 circulaire de même diamètre selon la formule exposée plus haut.

Il est à noter que pour une géométrie d'élément transducteur 1 non sphérique ou pour un élément transducteur 1 de contour non circulaire, il n'existe généralement pas de formule analytique pour exprimer l'acceptance angulaire en fonction des caractéristiques géométriques du transducteur. Une méthode de discrétisation (éléments finis, différences finies,...) peut alors être utilisée pour modéliser le champ émis par un tel transducteur.

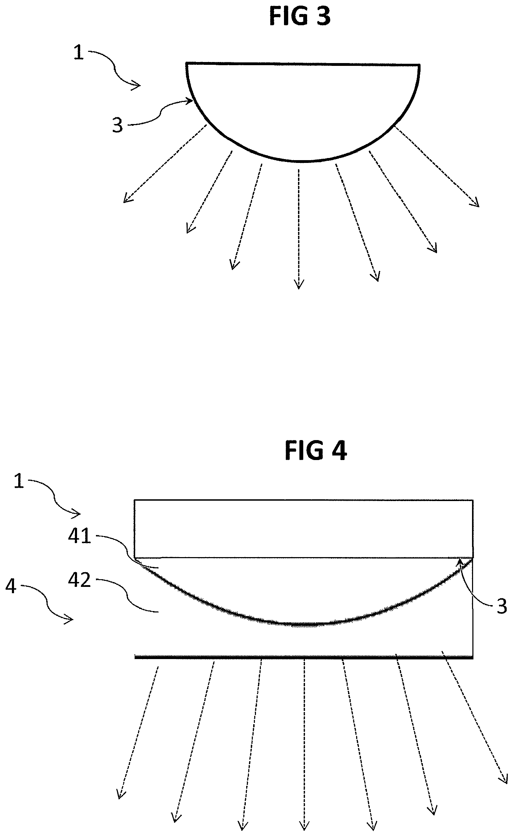

En référence aux figures 3, 4, 5 et 6, on a représenté, à titre illustratif et non limitatif, différents types d'éléments transducteurs 1 divergents, illustrant différentes techniques pouvant être mises en œuvre pour obtenir cette divergence. D'autres techniques peuvent être employées, de même que des combinaisons de techniques.

Comme illustré sur la figure 3, la surface d'émission 3 d'un élément transducteur 1 peut avoir une forme convexe dans la direction d'émission des ondes ultrasonores, illustrée sur les figures par des flèches en tirets. La convexité de la surface d'émission 3 d'un élément transducteur 1 peut être mesurée par un procédé mécanique tel qu'un palpage, ou par un procédé optique, tel qu'un scannage sans contact. On peut déterminer alors un rayon de courbure de cette surface d'émission 3, notamment dans le cas d'une convexité sphérique comme celle illustrée sur la figure 3.

Pour donner un exemple de dimensionnement d'un tel élément transducteur divergent convexe, on considère encore un élément transducteur 1 fonctionnant à 1 MHz avec 70% de bande passante, avec une géométrie circulaire et son diamètre 2a est de 9 mm (soit environ 6 longueurs d'onde dans l'eau). A titre explicatif et non limitatif, on suppose que la surface émettrice est convexe et sphérique de rayon de courbure R. On cherche le rayon de courbure R tel que l'acceptance angulaire à -3dB de l'élément transducteur convexe soit majorée de 10% par rapport à celle d'un élément transducteur plan circulaire de même diamètre 2a, qui est de 10° selon les calculs exposés plus hauts.

Dans cet exemple, on approxime donc la surface émettrice convexe par une portion de sphère de rayon R et de corde 2a, constituant le diamètre de l'élément transducteur sphérique. Par simulation et calcul, on peut déterminer que l'acceptance angulaire à -3dB de l'élément transducteur sphérique est supérieure à 11° (10°+10%) lorsque R < 20 mm. Par conséquent, un tel élément transducteur convexe de diamètre 9 mm fonctionnant à 1 MHz est considéré comme divergent si le rayon sphérique, ou rayon de courbure, de sa face avant est inférieur à 20 mm. Dans ce cas la flèche mesurable sur la face avant de l'élément est supérieure à 0.5 mm.

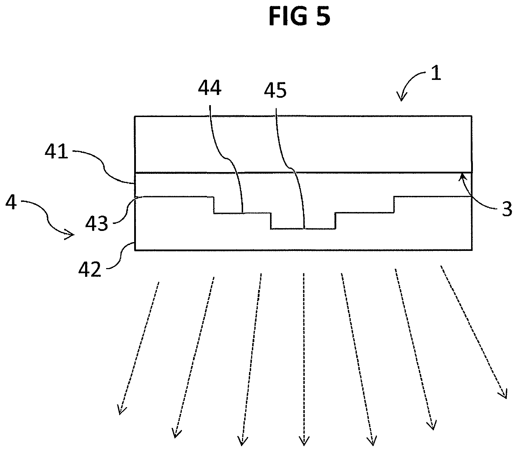

Les figures 4 et 5 illustrent une autre possibilité pour obtenir ou accentuer la divergence d'un élément transducteur ultrasonore 1. L'élément transducteur 1 peut être pourvu d'une lentille acoustique divergente 4. Cette lentille acoustique divergente 4 est disposée dans la direction d'émission des ondes ultrasonores, devant la surface d'émission 3 de l'élément transducteur ultrasonore 1.

Une telle lentille acoustique divergente 4 peut par exemple être constituée d'un dioptre de matériaux caractérisés par des vitesses de propagation des ultrasons différentes à l'intérieur de ceux-ci. Un matériau dans lequel les ultrasons se propagent avec une vitesse plus importante que dans l'eau, par exemple un métal ou un polymère, peut être associé à un matériau dans lequel les ultrasons se propagent avec une vitesse moins importante que dans l'eau, par exemple un élastomère de silicone.

Ainsi, une telle lentille divergente 4 peut comprendre deux couches de matériaux assemblées : une première couche 41 de matériau proche de la surface d'émission 3 de l'élément transducteur 1, dans laquelle les ultrasons se propagent avec une vitesse plus importante que dans l'eau, et une deuxième couche 42 de matériau, plus éloignée de la surface d'émission 3 de l'élément transducteur 1, dans laquelle les ultrasons se propagent avec une vitesse moins importante que dans l'eau.

Dans la figure 4, l'interface entre la première couche 41 de matériau et la deuxième couche 42 de matériau est convexe, de sorte que cette interface est plus éloignée de la surface d'émission 3 au niveau du centre de l'élément transducteur qu'en sa périphérie. L'interface peut ne pas être courbe ou régulière comme dans la figure 4. La lentille divergente 4 peut présenter une interface entre la première couche 41 de matériau et la deuxième couche 42 de matériau étagée entre plusieurs niveaux. Ces niveaux sont d'autant plus éloignés de la surface d'émission 3 qu'ils sont proches du centre.

Ainsi, par exemple, la figure 5 illustre une lentille divergente 4 comprenant une première couche 41 et une deuxième couche 42, avec une première région périphérique 43 dans laquelle l'interface entre ces deux couches est proche de la surface d'émission, puis une deuxième région intermédiaire 44 plus proche du centre dans laquelle l'interface est plus éloignée de la surface d'émission 3, et enfin une région centrale 45 dans laquelle l'interface est encore plus éloignée de la surface d'émission 3.

L'avantage d'une telle structure étagée tient dans sa plus grande facilité de réalisation par rapport à une structure de lentille telle que celle de la figure 4. Pour des raisons de simplicité, la lentille de la figure 5 est représentée avec seulement trois niveaux ou étages. Un autre nombre d'étages peut être envisagé. En effet, pour des raisons acoustiques, il peut être préférable de discrétiser davantage la forme de l'interface entre les deux couches de matériau 41, 42 composant la lentille. De fait, la géométrie de l'interface étagée est de préférence représentative de la surface idéale représentée par la figure 4. Un compromis est donc à trouver concernant le nombre d'étages en considérant à la fois le gain en facilité de fabrication et la perte en performance acoustique de focalisation/défocalisation de la lentille acoustique 4.

Il est également possible de prévoir que l'élément transducteur 1 se compose de plusieurs zones d'émission adjacentes. La figure 6 illustre un exemple d'un tel élément transducteur 1. Le transducteur 1 se compose de huit zones d'émission 50a, 50b, 50c, 50d, 50e, 50f, 50g, 50h. Ces zones d'émission 50 sont séparées électriquement les unes des autres, voire mécaniquement. Les zones d'émission 50 se distinguent par leur disposition, et en particulier par leurs différents éloignements du centre de l'élément transducteur 1. Par exemple, un tel élément transducteur 1 peut être constitué de zones d'émission 50 annulaires concentriques comme illustré schématiquement sur la figure 6bis.

Comme indiqué plus haut, chaque élément transducteur est piloté indépendamment par une voie de commande 51 portant un signal d'émission. Il y a donc autant de voies de commande 51 que d'éléments transducteurs 1. Un déphaseur 52 reçoit de la voie de commande 51 un signal d'émission global pour l'ensemble de l'élément transducteur 1. Ce signal d'émission global porte une excitation d'émission schématisée sur les figures 6 et 6bis par un point 53.

Chacune des zones d'émission 50a, 50b, 50c, 50d, 50e, 50f, 50g, 50h est reliée au déphaseur 52 par une voie de commande locale 54a, 54b, 54c, 54d, 54e, 54f, 54g, 54h.

À partir du signal d'émission global, le déphaseur 52 émet en direction de chacune des zones d'émission 50 de l'élément transducteur 1 un signal d'émission local propre à ladite zone. Ce signal d'émission local transite par la voie de commande locale 54 associée à ladite zone d'émission 50. Un signal d'émission local porte une excitation d'émission locale schématisée sur la figure 6 par des points 55a, 55b, 55c, 55d, 55e, 55f, 55g, 55h, respectivement 55a, 55b, 55c, 55d pour la figure 6bis.

Le déphaseur 52 détermine un signal d'émission local à partir du signal d'émission global en retardant temporellement l'excitation 53 portée par le signal d'émission global, par l'introduction d'un déphasage introduit électriquement. Un signal d'émission local est retardé par rapport audit signal d'émission global d'un retard d'autant plus grand que la zone 50 auquel ledit signal d'émission local est destiné est éloignée du centre de l'élément transducteur 1.

Ainsi, sur la figure 6, les points 55a, 55b, 55c, 55d, 55e, 55f, 55g, 55h et sur la figure 6bis les points 55a, 55b, 55c, 55d schématisant les excitations d'émission locale sont représentés décalés sur leurs voies de commande locale 54a, 54b, 54c, 54d, 54e, 54f, 54g, 54h respectives. Les deux excitations 55d, 55e destinées aux deux zones d'émission 50d, 50e les plus proches du centre de l'élément transducteur 1 sur la figure 6 sont temporellement en avance par rapport aux excitations 55c, 55f destinées aux zones d'émission 50c, 50f adjacentes qui sont plus éloignées du centre de l'élément transducteur 1, elles-mêmes temporellement en avance par rapport aux excitations 55b, 55g destinées aux zones d'émission 50b, 50g adjacentes qui sont plus éloignées du centre de l'élément transducteur 1. Les excitations 55a, 55h destinées aux zones d'émission 50a, 50h les plus éloignées du centre de l'élément transducteur 1 sont les plus retardées. Ce déphasage des excitations locales 55 permet la divergence des ultrasons émis.

Les éléments transducteurs 1 peuvent également être configurés pour émettre des ultrasons de façon divergente seulement au niveau d'un volume de travail. La figure 7 montre ainsi un élément transducteur 1 qui émet des ultrasons de façon convergente en un point focal élémentaire 72. Une fois passé ce point focal élémentaire 72, les ultrasons divergent, et, sont incidents de façon divergente au niveau d'une surface de travail 71.

La surface de travail 71 représentée correspond à une limite au-delà de laquelle est défini le volume de travail pour le réseau matriciel d'éléments transducteurs. Le point focal global du réseau matriciel d'éléments transducteurs est contenu dans ce volume de travail, et peut éventuellement le parcourir. On peut donc définir le volume de travail comme étant le lieu des points focaux globaux du réseau matriciel d'éléments transducteurs parcouru en déflexion. Le volume de travail correspond ainsi au volume cible pour les ondes ultrasonores émises, et duquel on cherche à déterminer les caractéristiques par ultrasons.

Les points focaux élémentaires des différents éléments transducteurs 1 sont distincts et non confondus. Les faisceaux ultrasonores émis par un élément transducteur 1 peuvent ainsi être convergents avant leur point focal élémentaire 72 respectif, puis divergents au niveau du volume de travail qui leur est commun, au-delà de la surface de travail 71..

On utilise donc ainsi des éléments transducteurs fortement convergents, qui ont toutefois, en raison de cette forte convergence, une acceptance angulaire à -3 dB par rapport au maximum au niveau de la surface de travail 71 qui est au moins de 10% supérieure à celle d'un élément transducteur plan équivalent de même dimension.

La distance focale élémentaire d'un élément transducteur 1 entre la surface d'émission 3 et le point focal élémentaire 72 dudit élément transducteur 1 est inférieure à la distance focale du réseau entre la surface de répartition 2 et le point focal global du réseau, et de préférence inférieur à la moitié de celle-ci. Par exemple, dans le cas d'un réseau matriciel avec une surface de répartition 2 concave (vue depuis la direction d'émission), le centre de courbure de la surface de répartition 2 au niveau d'un élément transducteur 1 est au moins deux fois plus éloigné de la surface d'émission 3 dudit élément transducteur 1 que le point focal élémentaire 72 dudit élément transducteur 1.

Il est ainsi possible d'utiliser des transducteurs convergents configurés dans le réseau matriciel pour émettre des ultrasons de façon divergente comme expliqué ci-dessus. Comme illustré sur la figure 7, la surface d'émission 3 d'un élément transducteur 1 peut avoir une forme concave dans la direction d'émission des ondes ultrasonores, illustrée sur les figures par des flèches en tirets.

De même que dans le cas de la figure 4, il est possible d'équiper un élément transducteur 1 d'une lentille qui cette fois est convergente, ainsi qu'illustré sur la figure 8. De même que pour la lentille divergente, la lentille convergente 80 peut être constituée de deux matériaux dont la géométrie de l'interface est inversée par rapport à celle d'une lentille divergente.

La lentille 80 peut comprendre deux couches de matériaux assemblées : une première couche 81 de matériau proche de la surface d'émission 3 de l'élément transducteur 1, dans laquelle les ultrasons se propagent avec une vitesse plus importante que dans l'eau, et une deuxième couche 82 de matériau, plus éloignée de la surface d'émission 3 l'élément transducteur 1, dans laquelle les ultrasons se propagent avec une vitesse moins importante que dans l'eau. Dans la figure 8, l'interface entre la première couche 81 de matériau et la deuxième couche 82 de matériau est concave, de sorte que cette interface est plus éloignée de la surface d'émission 3 au niveau de la périphérie de l'élément transducteur qu'en son centre. L'interface peut ne pas être courbe ou régulière comme dans la figure 8. La lentille convergente 80 peut présenter une interface entre la première couche 81 de matériau et la deuxième couche 82 de matériau étagée entre plusieurs niveaux. Ces niveaux sont d'autant plus éloignés de la surface d'émission 3 qu'ils sont éloignés du centre, de façon inversée par rapport à la lentille illustrée par la figure 5.

Il est également possible de prévoir que l'élément transducteur 1 se compose de plusieurs zones d'émission adjacentes, comme dans la figure 6. Toutefois, à l'inverse du mode de réalisation de la figure 6, le signal d'émission local est retardé par rapport audit signal d'émission global d'un retard d'autant plus grand que la zone auquel ledit signal d'émission local est destiné est proche du centre de l'élément transducteur 1.

Concernant la définition et le calcul des distances focales, on pourra se référer à l'ouvrage de T.L. Szabo, 'Diagnostic Ultrasound Imaging: Inside Out', 2nd Edition, Elsevier Science, 2013, ISBN 9780123964878, en particulier pages 191-193.

Grâce à la combinaison de la divergence individuelle des éléments transducteurs, de leur grande taille, et de leur répartition sans symétrie, on obtient un réseau de transducteurs comprenant relativement peu d'éléments pour une grande surface de répartition du réseau, et qui permet de défléchir le faisceau d'ultrasons sur une grande plage angulaire.

Des modifications restent possibles, notamment du point de vue de la constitution des diverses caractéristiques techniques ou par substitution d'équivalents techniques, sans sortir pour autant du domaine de protection de l'invention.

**Revendications**

1. Réseau matriciel d'éléments transducteurs ultrasonores (1) à commande de phase adapté pour défléchir un faisceau d'ultrasons sur une plage angulaire, comprenant une pluralité d'éléments transducteurs (1) répartis sur une surface de répartition, chacun des éléments transducteurs (1) étant adapté pour émettre, à partir d'une surface d'émission (3), des ultrasons à une fréquence comprise entre 100 kHz et 100 MHz en direction d'un volume de travail, **caractérisé en ce que**

   - chacun des éléments transducteurs (1) est configuré pour émettre des ultrasons de façon divergente au moins au niveau du volume de travail, chaque élément transducteur (1) ayant une acceptance angulaire à -3 dB par rapport au maximum d'au moins de 10% supérieure à celle d'un transducteur plan équivalent de même dimension;
   - lesdits éléments transducteurs (1) présentent chacun une plus grande dimension de leur surface d'émission supérieure à 1,5 fois la longueur d'onde des ultrasons dans l'eau à 30°C,

   la répartition des éléments transducteurs (1) sur la surface de répartition du réseau est apériodique.

2. Réseau selon la revendication 1, dans lequel la répartition des éléments transducteurs (1) sur la surface de répartition présente une absence de symétrie.

3. Réseau matriciel d'éléments transducteurs ultrasonores selon l'une quelconque des revendications précédentes, dans lequel le réseau de transducteurs comprend au moins 64 éléments transducteurs (1) et la plus grande dimension de la surface de répartition (2) sur laquelle se répartissent lesdits éléments transducteurs est supérieure à douze fois la longueur d'onde des ultrasons dans l'eau à 30°C.

4. Réseau matriciel d'éléments transducteurs ultrasonores selon la revendication précédente, dans laquelle la surface de répartition (2) présente une géométrie concave vue depuis la direction d'émission des ondes ultrasonores.

5. Réseau matriciel d'éléments transducteurs ultrasonores selon l'une quelconque des revendications précédentes, dans lequel la surface d'émission (3) des éléments transducteurs (1) a une forme convexe vue depuis la direction d'émission des ondes ultrasonores.

6. Réseau matriciel d'éléments transducteurs ultrasonores selon l'une des revendications précédentes, dans lequel chaque élément transducteur (1) est pourvu d'une lentille acoustique divergente (4).

7. Réseau matriciel d'éléments transducteur selon la revendication précédente, dans lequel la lentille acoustique divergente (4) comprend au moins deux couches de matériaux (41, 42) disposés dans la direction d'émission, une première couche (41) de matériau proche de l'élément transducteur (1), dans laquelle les ultrasons se propagent avec une vitesse plus importante que dans l'eau, et une deuxième couche (42) de matériau, plus éloignée de l'élément transducteur (1), dans laquelle les ultrasons se propagent avec une vitesse moins importante que dans l'eau.

8. Réseau matriciel d'éléments transducteurs ultrasonores selon la revendication précédente, dans lequel l'interface entre les deux couches de matériaux (41, 42) de la lentille acoustique divergente présente une forme convexe, de sorte que la distance entre ladite interface et la surface d'émission (3) soit supérieure au centre de la surface d'émission par rapport à sa périphérie.

9. Réseau matriciel d'éléments transducteurs ultrasonores selon l'une des revendications précédentes, dans lequel chaque élément transducteur (1) se compose de plusieurs zones d'émission (50a, 50b, 50c, 50d, 50e, 50f, 50g, 50h ) commandées chacune en émission par un signal d'émission local, et un déphaseur (52) recevant d'une voie de commande (51) un signal d'émission global pour l'ensemble d'un élément transducteur (1) et émettant en direction de chacune des zones d'émission dudit élément transducteur le signal d'émission local propre à ladite zone d'émission, ledit signal d'émission local étant retardé par rapport audit signal d'émission global d'un retard d'autant plus grand que la zone auquel ledit signal d'émission local est destiné est éloignée du centre de l'élément transducteur.

10. Réseau matriciel d'éléments transducteurs ultrasonores selon l'une des revendications 1 à 4, dans lequel la distance focale élémentaire entre la surface d'émission (3) d'un élément transducteur (1) et le point focal élémentaire (72) dudit élément transducteur (1) est inférieure à la distance focale globale entre la surface de répartition (2) et un point focal global du réseau matriciel d'éléments transducteurs ultrasonores.

11. Réseau matriciel d'éléments transducteurs ultrasonores selon la revendication 10, dans lequel des éléments transducteurs (1) présentent chacun un point focal élémentaire (72) distinct des points focaux élémentaires (72) des autres éléments transducteurs.

12. Réseau matriciel d'éléments transducteurs ultrasonores selon l'une des revendications 10 ou 11, dans lequel chaque élément transducteur (1) est pourvu d'une lentille acoustique convergente (80).

13. Réseau matriciel d'éléments transducteurs ultrasonores selon l'une des revendications 10 à 12, dans lequel chaque élément transducteur (1) se compose de plusieurs zones d'émission (50a, 50b, 50c, 50d, 50e, 50f, 50g, 50h ) commandées chacune en émission par un signal d'émission local, et un déphaseur (52) recevant d'une voie de commande (51) un signal d'émission global pour l'ensemble d'un élément transducteur (1) et émettant en direction de chacune des zones d'émission dudit élément transducteur le signal d'émission local propre à ladite zone d'émission, ledit signal d'émission local étant retardé par rapport audit signal d'émission global d'un retard d'autant plus grand que la zone auquel ledit signal d'émission local est destiné est proche du centre de l'élément transducteur.

## Patentansprüche

1. Matrixanordnung von Ultraschallwandlerelementen (1) mit Phasensteuerung, die geeignet ist, einen Ultraschallstrahl über einen Winkelbereich abzulenken, umfassend eine Vielzahl von Wandlerelementen (1), die auf einer Verteilungsoberfläche verteilt sind, wobei jedes der Wandlerelemente (1) geeignet ist, ab einer Sendeoberfläche (3) Ultraschall mit einer Frequenz, die zwischen 100 kHz und 100 MHz liegt, in Richtung eines Arbeitsvolumens zu senden,
**dadurch gekennzeichnet, dass**

• jedes der Wandlerelemente (1) ausgelegt ist, um Ultraschall mindestens im Bereich des Arbeitsvolumens streuend zu senden, wobei jedes Wandlerelement (1) eine Winkelakzeptanz bei -3 dB im Verhältnis zum Maximum von mindestens 10% über der eines äquivalenten ebenen Wandlers gleicher Abmessung hat;
• die Wandlerelemente (1) jeweils eine größere Abmessung ihrer Sendeoberfläche haben, die 1,5 Mal größer als die Wellenlänge des Ultraschalls in Wasser bei 30°C ist,

wobei die Verteilung der Wandlerelemente (1) auf der Verteilungsoberfläche aperiodisch ist.

2. Anordnung nach Anspruch 1, wobei die Verteilung der Wandlerelemente (1) auf der Verteilungsoberfläche eine Symmetrieabwesenheit aufweist.

3. Matrixanordnung von Ultraschallwandlerelementen nach einem der vorangehenden Ansprüche, wobei die Wandleranordnung mindestens 64 Wandlerelemente (1) umfasst und die größte Abmessung der Verteilungsoberfläche (2), auf der sich die Wandlerelemente verteilen, zwölfmal größer als die Wellenlänge des Ultraschalls in Wasser bei 30°C ist.

4. Matrixanordnung von Ultraschallwandlerelementen nach vorangehendem Anspruch, wobei die Verteilungsoberfläche (2) eine konkave Geometrie aufweist, von der Senderichtung der Ultraschallwellen aus gesehen.

5. Matrixanordnung von Ultraschallwandlerelementen nach einem der vorangehenden Ansprüche, wobei die Sendeoberfläche (3) der Wandlerelemente (1) eine konvexe Form aufweist, von der Senderichtung der Ultraschallwellen aus gesehen.

6. Matrixanordnung von Ultraschallwandlerelementen nach einem der vorangehenden Ansprüche, wobei jedes Wandlerelement (1) mit einer akustischen Streulinse (4) versehen ist.

**7.** Matrixanordnung von Wandlerelementen nach vorangehendem Anspruch, wobei die akustische Streulinse (4) mindestens zwei Materialschichten (41, 42) umfasst, eine erste Materialschicht (41) in der Nähe des Wandlerelements (1), in der sich der Ultraschall mit einer höheren Geschwindigkeit als in Wasser weiterverbreitet, und eine zweite Materialschicht (42), die vom Wandlerelement (1) entfernter ist, in der sich der Ultraschall mit einer langsameren Geschwindigkeit als in Wasser weiterverbreitet, die in der Senderichtung angeordnet sind.

**8.** Matrixanordnung von Ultraschallwandlerelementen nach vorangehendem Anspruch, wobei die Schnittstelle zwischen den zwei Materialschichten (41, 42) der akustischen Streulinse eine konvexe Form aufweist, so dass der Abstand zwischen der Schnittstelle der Sendeoberfläche (3) im Zentrum der Sendeoberfläche im Verhältnis zu ihrem Umfang größer ist.

**9.** Matrixanordnung von Ultraschallwandlerelementen nach einem der vorangehenden Ansprüche, wobei jedes Wandlerelement (1) aus mehreren Sendezonen (50a, 50b, 50c, 50d, 50e, 50f, 50g, 50h) zusammengesetzt ist, die jeweils beim Senden von einem lokalen Sendesignal gesteuert werden, und ein Phasenschieber (52), der von einem Steuerweg (51) ein globales Sendesignal für die Gesamtheit eines Wandlerelements (1) empfängt und in Richtung jeder der Sendezonen des Wandlerelements das lokale Sendesignal sendet, das der Sendezone zu eigen ist, wobei das lokale Sendesignal im Verhältnis zum globalen Sendesignal um eine Verzögerung verzögert ist, die umso größer ist, je mehr die Zone, für die das lokale Sendesignal bestimmt ist, vom Zentrum des Wandlerelements entfernt ist.

**10.** Matrixanordnung von Ultraschallwandlerelementen nach einem der Ansprüche 1 bis 4, wobei die elementare Brennweite zwischen der Sendeoberfläche (3) eines Wandlerelements (1) und dem elementaren Brennpunkt (72) des Wandlerelements (1) kleiner als die globale Brennweite zwischen der Verteilungsoberfläche (2) und einem globalen Brennpunkt der Matrixanordnung von Ultraschallwandlerelementen ist.

**11.** Matrixanordnung von Ultraschallwandlerelementen nach Anspruch 10, wobei Wandlerelemente (1) jeweils einen elementaren Brennpunkt (72) aufweisen, der sich von den elementaren Brennpunkten (72) der anderen Wandlerelemente unterscheidet.

**12.** Matrixanordnung von Ultraschallwandlerelementen nach einem der Ansprüche 10 oder 11, wobei jedes Wandlerelement (1) mit einer konvergenten akustischen Linse (80) versehen ist.

**13.** Matrixanordnung von Ultraschallwandlerelementen nach einem der Ansprüche 10 bis 12, wobei jedes Wandlerelement (1) aus mehreren Sendezonen (50a, 50b, 50c, 50d, 50e, 50f, 50g, 50h) zusammengesetzt ist, die jeweils beim Senden von einem lokalen Sendesignal gesteuert werden, und ein Phasenschieber (52), der von einem Steuerweg (51) ein globales Sendesignal für die Gesamtheit eines Wandlerelements (1) empfängt und in Richtung jeder der Sendezonen des Wandlerelements das lokale Sendesignal sendet, das der Sendezone zu eigen ist, wobei das lokale Sendesignal im Verhältnis zum globalen Sendesignal um eine Verzögerung verzögert ist, die umso größer ist, je mehr die Zone, für die das lokale Sendesignal bestimmt ist, nah am Zentrum des Wandlerelements ist.

## Claims

**1.** A phased matrix array of ultrasonic transducer elements (1) adapted to deflect an ultrasonic beam over an angular range, comprising a plurality of transducer elements (1) distributed over a distribution surface, each of the transducer elements (1) being adapted to emit, from a transmitting surface (3), ultrasonics at a frequency between 100 kHz and 100 MHz towards a working volume,
**characterized in that**:

- each of the transducer elements (1) is configured to emit ultrasound divergently at least at the working volume, each transducer element (1) having an angular acceptance at -3 dB from maximum of at least 10% greater than that of an equivalent planar transducer of the same size;
- said transducer elements (1) each have a larger dimension of their emission surface than 1.5 times the wavelength of ultrasound in water at 30°C,

wherein the distribution of the transducer elements (1) over the distribution surface is aperiodic.

**2.** The array according to claim 1, wherein the distribution of the transducer elements (1) on the distribution surface has a lack of symmetry.

3. The matrix array of ultrasonic transducer elements according to any one of the preceding claims, wherein the transducer array comprises at least 64 transducer elements (1) and the largest dimension of the distribution surface (2) over which said transducer elements are distributed is greater than twelve times the wavelength of the ultrasound in water at 30°C.

4. The matrix array of ultrasonic transducer elements according to the preceding claim, wherein the distribution surface (2) has a concave geometry as viewed from the direction of emission of the ultrasonic waves.

5. The matrix array of transducer elements according to any one of the preceding claims, wherein the transmitting surface (3) of the transducer elements (1) has a convex shape as viewed from the direction of transmission of the ultrasonic waves.

6. The matrix array of ultrasonic transducer elements according to any of the preceding claims, wherein each transducer element (1) is provided with a diverging acoustic lens (4).

7. The matrix array of transducer elements according to the preceding claim, wherein the divergent acoustic lens (4) comprises at least two layers of material (41, 42) arranged in the direction of emission, a first layer (41) of material close to the transducer element (1), in which ultrasound propagates with a higher velocity than in water, and a second layer (42) of material, further away from the transducer element (1), in which ultrasound propagates with a lower velocity than in water.

8. The matrix array of ultrasonic transducer elements according to the preceding claim, wherein the interface between the two material layers (41, 42) of the divergent acoustic lens has a convex shape, such that the distance between said interface and the emission surface (3) is greater at the center of the emission surface than at its periphery.

9. The matrix array of ultrasonic transducer elements according to one of the preceding claims, wherein each transducer element (1) is composed of several transmission zones (50a, 50b, 50c, 50d, 50e, 50f, 50g, 50h ) each controlled in transmission by a local transmission signal, and a phase shifter (52) receiving from a control channel (51) a global transmission signal for the whole of a transducer element (1) and transmitting in the direction of each of the transmission zones of said transducer element the local transmission signal specific to said transmission zone, said local transmission signal being delayed with respect to said global transmission signal by a delay which is all the greater as the zone for which said local transmission signal is intended is far away from the center of the transducer element.

10. The matrix array of ultrasonic transducer elements according to any of claims 1 to 4, wherein the elemental focal distance between the transmitting surface (3) of a transducer element (1) and the elemental focal point (72) of said transducer element (1) is smaller than the overall focal distance between the splitting surface (2) and an overall focal point of the array of ultrasonic transducer elements.

11. The array of ultrasonic transducer elements of claim 10, wherein transducer elements (1) each have an elemental focal point (72) distinct from the elemental focal points (72) of the other transducer elements.

12. The array of ultrasonic transducer elements of any of claims 10 or 11, wherein each transducer element (1) is provided with a converging acoustic lens (80).

13. A matrix array of ultrasonic transducer elements according to one of claims 10 to 12, wherein each transducer element (1) consists of several transmission zones (50a, 50b, 50c, 50d, 50e, 50f, 50g, 50h ) each controlled in transmission by a local transmission signal, and a phase shifter (52) receiving from a control channel (51) a global transmission signal for the whole of a transducer element (1) and transmitting in the direction of each of the transmission zones of said transducer element the local transmission signal specific to said transmission zone, said local transmission signal being delayed with respect to said global transmission signal by a delay which is all the greater as the zone for which said local transmission signal is intended is close to the center of the transducer element.

# FIG 1

# FIG 2

## FIG 3

1

3

## FIG 4

1

41

4

42

3

# FIG 5

# FIG 6

# FIG 6bis

## FIG 7

## FIG 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEONID R. GAVRILOV ; JEFFREY W. HAND.** A Theoretical Assessment of the Relative Performance of Spherical Phased Arrays for Ultrasound Surgery. *IEEE transactions on ultrasonic, ferroelectric and frequency control,* 2000, vol. 47 (1

- **GORDON. S. KINO.** Acoustic Waves: Devices, Imaging, and Analog Signal Processing. Prentice Hall Inc, 1987
- **T.L. SZABO.** Diagnostic Ultrasound Imaging: Inside Out. Elsevier Science, 2013, 191-193